# EUROPEAN PATENT APPLICATION

(11) **EP 2 469 473 A2**
(43) Date of publication of application: **27.06.2012**
(21) Application number: 11195726.2
(22) Date of filing: 26.12.2011
(51) Int. Cl.: G06T 11/60

(54) **Methods and systems for viewing objects within an uploaded image**

(30) Priority: 27.12.2010 US 978895
(71) Applicant: Art.com, Inc., Emeryville, CA 94608 (US)
(72) Inventor: Heinstein, Michael, Berkeley, CA California 94705 (US); Mameli, Roberto, San Francisco, CA California 94114 (US); Martin, Geoffroy, Berkeley, CA California 94705 (US)
(74) Representative: Dendorfer, Claus

(57) **Abstract**

Methods and systems for accurately determining how art will appear in a particular setting. In one embodiment, a user uploads a photograph of the setting as a background for displaying an image of an object. The image of the object is disposed within the photograph and customizable to a preference of the user. In another embodiment, the image of the object is disposed into the photograph of a setting and proportionally scaled to fit a dimension of a feature within the particular setting of the photograph. A user measures the actual dimension (height and/or width, for example) of the feature within the real particular setting and applies the measurement to the image of the feature in the photograph. In response, the disclosed system automatically and proportionally resizes the image of the object to accurately represent how the object will appear in the actual setting.

## Description

### FIELD OF THE INVENTION

At least one embodiment of the present invention pertains to accurately scaling an object disposed in an uploaded image based on a feature of the uploaded image and, more particularly, to methods and systems for determining how art objects will appear in a particular setting by utilizing an uploaded picture of the particular setting.

### BACKGROUND

Accurately determining how a piece of art will appear, fit and feel in a particular setting is a common and long-standing problem of potential buyers of art. This is particularly a problem when viewing an image of the art online where a potential purchaser of a piece of art must take a leap of faith and hope that the purchased piece of art will work for a particular space or room. Some considerations of a potential art purchaser are whether a piece of art is appropriately sized for a desired particular space, whether it has the right color and style to coordinate with walls, crown molding, window coverings and other room décor, and how the addition of the piece of art will affect other room objects. Even more challenging is whether the piece of art will project the desired aesthetic appeal to "pull the room together" when the piece of art is mixed with the other objects surrounding it.

One challenge of viewing art for purchase online occurs when attempting to visualize how the art appears based on the two-dimensional nature of an image of the art. Translating the two-dimensional image onto an actual three-dimensional setting is difficult for the mind to visualize and, at best, leads to inaccuracies expressed when the actual art piece is placed in a desired location.

Online retailers have attempted to overcome some of these difficulties by allowing a user to view a purchasable piece of art on top of a predetermined background. The background is commonly chosen from an array of different user selectable colors to reflect a color of the setting for which the art is chosen. The image of the art piece is projected on top of the background so that the user can see, in one area, both the image of the art and the background. One problem with this approach is that matching a wall's actual color with a color swath, commonly used by this approach to colorize the background, is inaccurate because of the variances of color dies, shading, contrast, and natural fading or vibrance expressed in the wall's true color. An additional problem with this approach is that it lacks the ability to show the scale of the image of art in proportion to the size and shape of the target room and objects in the room or to show the image of art in the context of the target room adjacent to other objects in the room.

Another approach to attempt to overcome the challenges of accurately determining how art will appear and affect a particular space is to project the desired art piece on top of a computer-generated or predetermined room setting. A room setting may have a background color as described in the previous approach and additionally has room objects to create the appearance of a living room, bedroom, kitchen, or hall way, for example. The art piece is projected into the room setting so that the user can get a sense of depth and spacing of the art within a typical type of environment. Some approaches allow the art to be sized up and down to attempt to proportion the art to the room. These approaches, however, fail to solve the aforementioned problems because the room settings are predetermined, typically from stock photography or computer-rendered graphics, and thus only allow for an inaccurate approximation of how the art will appear in the user's own particular setting having unique room objects, arrangements, and lighting.

Therefore, the problems of an inability to accurately determine how an image of art will appear in a particular setting discourages buyers from taking a calculated risk of purchasing art that may not meet the demands of the room in which the art is targeted, resulting in a stagnating market of buyers as realized by online art dealers and retailers.

### SUMMARY

Introduced herein are methods and systems for accurately determining how a remote object will appear in a particular setting. In one embodiment, a user uploads an image or a photograph of the particular setting to use as a background for displaying an image of the object. The particular setting in the photograph is of a space, room or other setting in which the user desires to display the object. Once a user selects an image of the object, that image is disposed on the photograph of the particular setting where the image of the object is adjustable by the user to various dimensions and/or positions within the photograph.

The uploaded image is stored at the disclosed system. A stored image can be recalled by the disclosed system or user without the need to re-upload the image for use as a background for any of a series of images of objects.

An image of an object is customizable to a preference of the user. Some customizations are available equally to most types of objects. For example, a user can customize a size of an object for objects available in various different sizes and formats. Other customizations are available to a particular type of object. For example, wall décor is customizable using different types of frames of various colors and styles, matting choices, and glass coverings.

The image of the customized object is adjustably viewable on the particular setting within the photograph. The user can adjust the image by moving the image throughout the photograph to a position that the actual object will occupy in the real setting.

In a particular embodiment, the object is a piece of art, such as a wall décor, sculpture, statue, ceramic work, glass work, metal work, mixed media art object and installation.

In another embodiment, an image of art is disposed into the photograph of a particular setting and proportionally scaled to fit the dimension of a feature or an object within the particular setting of the photograph. A user measures the actual dimension (height and/or width) of a known object or feature within the particular setting. The user then indicates locations of the object within the photograph and the value of the measured dimension and, in response, the disclosed system automatically resizes the image of the art to proportionally adjust to the dimensions of the measured object. Once resized, the image of the art retains an ability to be moved throughout the photograph into a desirable position and/or skewed to fit various angles within the image of the particular setting.

In a further embodiment, a graphical representation of a measurement tool provides to the user an ability to indicate on the photograph the location of an object or feature within the setting for applying the measured dimensions previously determined from measuring the real object or feature. The graphical representation is used by the user to indicate measuring points of the object within the photograph that are substantially the same as the actual measuring points used by the user to measure the real object. The graphical representation tool can indicate a path between the measuring points as a rudimentary line, graphical "ruler," or "tape measure" to visually represent to the user the measured dimension.

The solution presented herein overcomes the problems of an inability to accurately determine how art or other objects will appear in a particular setting based on an image of the art.

### BRIEF DESCRIPTION OF THE DRAWINGS

One or more embodiments of the present invention are illustrated by way of example and not limitation in the figures of the accompanying drawings, in which like references indicate similar elements.
Figure 1 illustrates an online art processing environment in which the present invention can be implemented.
Figure 2 is a block diagram showing an example of the hardware architecture of a computer that can perform the disclosed methods and systems.
Figure 3 is an example of a mobile device in which the present invention can be implemented.
Figure 4 is a block diagram showing an example of the hardware architecture of a mobile device that can perform the disclosed methods and systems.
Figure 5 is a flow diagram illustrating a process for making an online purchase of art based on customizing an image of the art disposed on a user uploaded image of a particular setting.
Figure 6a is an example image of art that is customizable by a user.
Figure 6b is an example image of a particular setting uploaded by a user.
Figure 6c illustrates an example image of art disposed over the example image of a particular setting uploaded by a user and a graphical representation of a measuring tool used to proportionally scale the example image of art.
Figure 6d illustrates the disposed proportionally scaled example image of art movably positioned at a desired location within the example image of a particular setting.

### DETAILED DESCRIPTION

References in this specification to "an embodiment," "one embodiment," or the like, mean that the particular feature, structure or characteristic being described is included in at least one embodiment of the present invention. Occurrences of such phrases in this specification do not necessarily all refer to the same embodiment. References in this specification to "art," "art work," "piece of art," "art object," or the like, are used interchangeably. Furthermore, though the specification refers to "art," an "art processing environment" and "images of art," the disclosed methods and systems contemplate the use of non-art related objects; however, "art" is used throughout the specification to aid in the illustration of the disclosed methods and systems and not to serve as a limitation.

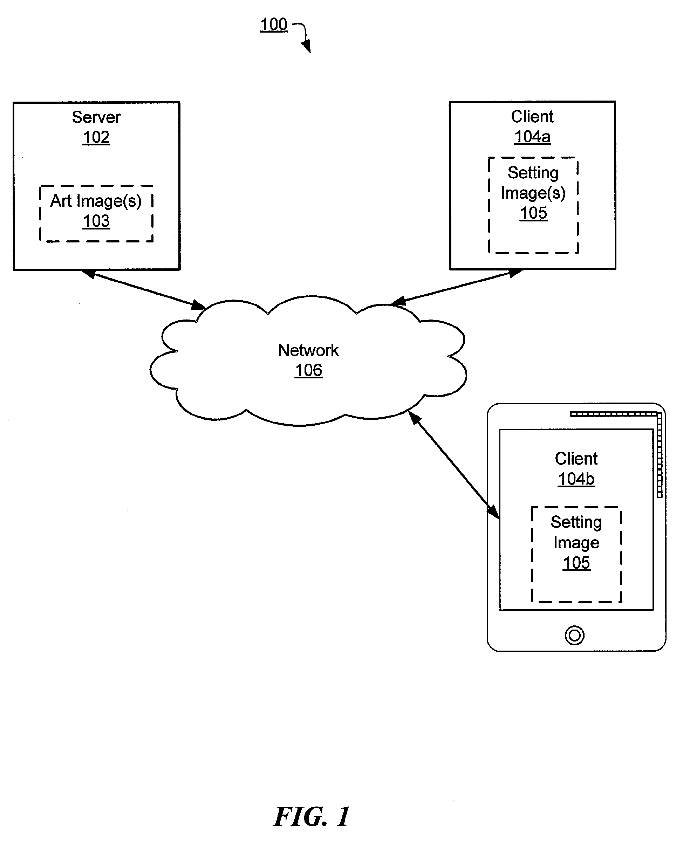

Figure 1 illustrates an online art processing environment 100 in which the present invention can be implemented. It is noted that the online art processing environment described here is for illustration of one type of a configuration in which the techniques can be implemented and that other online art processing configurations and schemes can be used for implementing the techniques introduced herein.

Figure 1 shows an online art processing environment 100, which includes a server system 102 connected via a network 106 to clients 104a and 104b. The environment 100 can be utilized to perform aspects of the invention. For example in one embodiment, the environment 100 is used to dispose a proportionally scaled image of art 103 onto a user-uploaded image of a particular setting 105.

The server 102 may be, for example, a standard computing system such as a particular computer (PC) or server-class computer, equipped with an operating system. The server 102 may perform various functions and management operations, such as storing images of art 103, customizing the images of art 103 based on a preference of a user, storing and applying user preferences, receiving input from clients 104a and/or 104b, overlaying images of art 103 onto user-uploaded images of the particular setting 105, and proportionally scaling the overlain images of art based on an object or feature within the particular setting of the user-uploaded image of the particular setting 105.

Images of art 103 are electronic files that store data representing an actual work of art or other object. The images of art 103 can be stored at the server 102 where they are viewable by a user at client 104a and/or 104b via a web browser. Optionally, the images of art 103 can be transferred over the network 106 and stored at clients 104a and/or 104b. Each image can include any type of work of art, such as a picture or other wall covering, sculpture, architecture, metal work, ceramic, bust, vase, etc. Furthermore, and as previously described, an image of art 103 can contain non-art-related objects. The number of images of art 103 available is variably dependent on the storage capacity available to the server 102.

The server 102 can connect, via the computer network 106, to clients 104a and 104b. Network 106 can be, for example, a telecommunications network, such as those based on second generation (2G), third generation (3G) and fourth generation (4G) mobile technology, a local area network (LAN), wide area network (WAN), a global area network, such as the Internet, and can make use of any conventional or nonconventional network technologies.

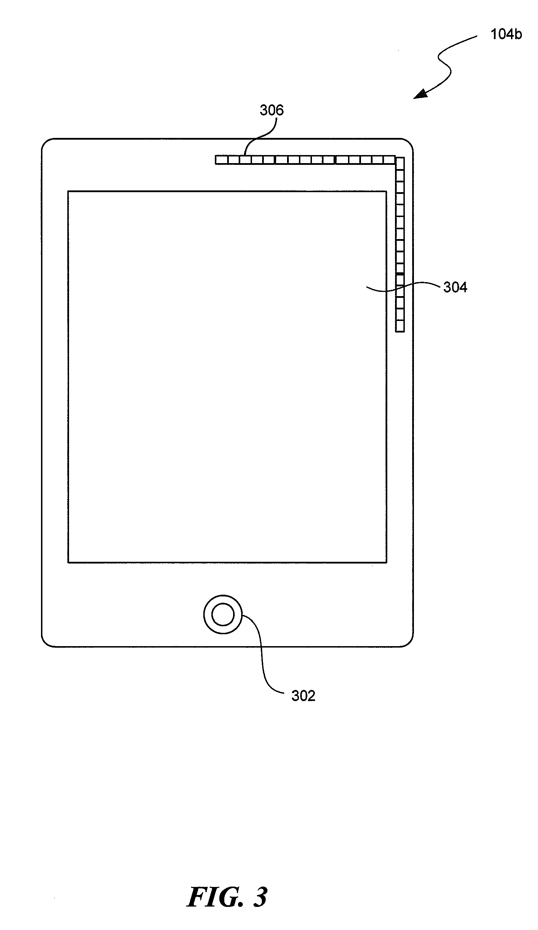

The client 104a can be a standard computing device, such as a particular computer, laptop computer, tablet, or other computing system capable of connecting to the network 106. The client 104b can be a standard mobile computing device, such as a cell phone or smart phone, such as an iPhone, Blackberry, or Android-based phone, capable of connecting to the server 102 through the network 106. Figure 3 is an example of a mobile device in which the present invention can be implemented. The mobile device 104b has an input device 302 to navigate and select data communicated via antenna system 306 to/from the server 102 and shown at display 304.

The clients 104a and/or 104b may include touch-sensitive displays that receive input to perform functions based on one or more user touches. The clients 104a and/or 104b may perform various functions and management operations, such as capturing an image of the particular setting 105, uploading data to the server 102, customizing the images of art 103, adjusting an image of art 103 to a desired location within the image of the particular setting 105, and entering user preferences.

An Image of the particular setting 105 is an electronic file, such as a photograph, that stores data representing an actual particular setting of a user, such as a living room, kitchen, bedroom, dinning room, lounge, or office space. The image of the particular setting 105 includes a space in which a user plans to place a piece of art. By nonlimiting example, if the user plans to purchase artwork to place above a fireplace mantle, the particular setting in the image of the particular setting 105 may include the fireplace, mantle, a space between the mantle and a ceiling. The image of the particular setting 105 can be captured by a camera attached to the client 104a and/or 104b or the image of the particular setting 105 can be separately captured and loaded into the client 104a and/or 104b. The number of images of the particular setting 105 is variably dependent on the storage capacity available to the clients 104a and 104b. An upload of the image of a particular setting 105 to server 102 may optionally be limited by a configuration at server 102. Once uploaded, an image of a particular setting 105 is storable and retrievable by the server 102 and/or the client 104a/104b on behalf of a user. An uploaded image of the particular setting 105 may be stored at the server 102 and associated with a profile of a user such that the image of the particular setting 105 is available to the user over multiple sessions.

It is noted that, within the online art processing environment 100, any other suitable numbers of servers, clients, images, and/or networks may be employed.

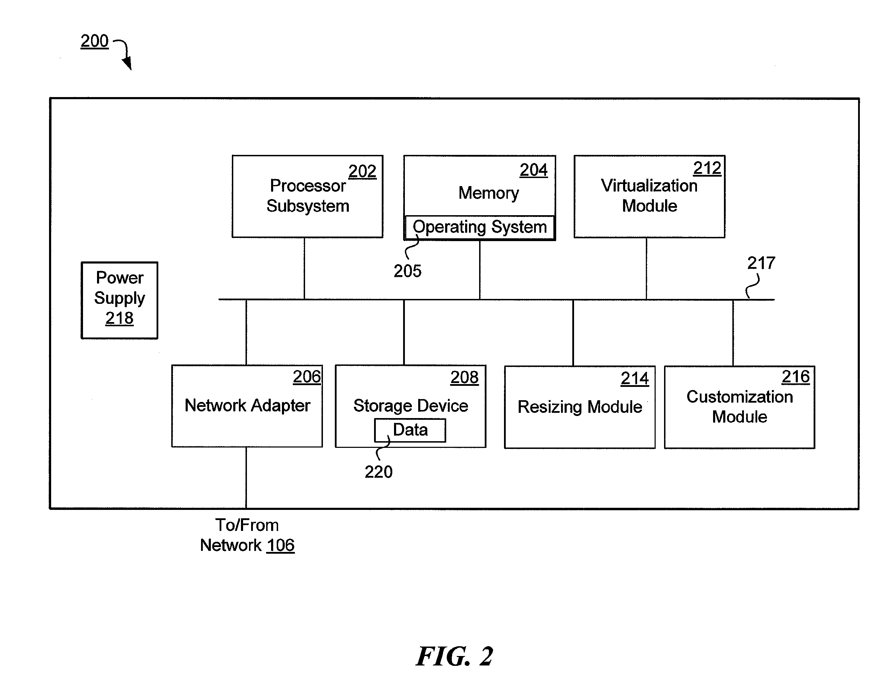

Figure 2 is a diagram illustrating an example of the internal architecture 200 of a server 102 that can implement one or more features of the invention. In the illustrated embodiment, the server architecture 200 is a computer system that includes a processor subsystem 202 that further includes one or more processors. The server architecture 200 further includes a memory 204 having portions of an operating system 205, a network adapter 206, a storage device 208, a virtualization module 212, a resizing module 214, and a customization module 216, each interconnected by an interconnect 217 and powered by a power supply 218.

The server architecture 200 can be embodied as a single- or multi-processor online art processing system executing the server 102 that preferably implements a high-level module, to proportionally resize and dispose a user-selected image of art into a user-uploaded image of a particular setting, the proportional resizing based on a user-inputted measurement of an object within the particular setting of the uploaded image of the particular setting 105.

The memory 204 illustratively comprises storage locations that are addressable by the processors 202 and modules 212 through 216 for storing software program code and data structures associated with the present invention. The processor 202 and modules may, in turn, comprise processing elements and/or logic circuitry configured to execute the software code and manipulate the data structures. The operating system 205, portions of which are typically resident in the memory 204 and executed by the processor(s) 202, functionally organizes the server architecture 200 by (among other things) configuring the processor(s) 202 to invoke storage, virtualization, resizing and customization related operations in support of the present invention. It will be apparent to those skilled in the art that other processing and memory implementations, including various computer readable storage media, may be used for storing and executing program instructions pertaining to the technique introduced here.

The network adapter 206 includes one or more ports to couple the server architecture 200 via the network 106 to the client 104a. Additionally, the network adapter 206, or a separate additional adapter, is further configured to connect, via the network 106, to the mobile network serving client 104b. The network adapter 206 thus can include the mechanical, electrical and signaling circuitry needed to connect the server architecture 200 to the network 106. The server 102 and the clients 104a and/or 104b can communicate, via the network 106 by exchanging discrete frames or packets of data according to pre-defined protocols, such as TCP/IP. For example, the network adapter 206 can receive from the clients 104a and/or 104b user input, such as a measurement or an image of the particular setting 105.

The storage device 208 cooperates with the operating system 205 to access information requested by the server 102. Data 220, including images of art 103, images of the particular setting 105, and user profiles and/or preferences, may be stored on any type of attached array of writable storage media, such as magnetic disk or tape, optical disk (e.g., CD-ROM or DVD), flash memory, solid-state disk (SSD), electronic random access memory (RAM), micro-electro mechanical and/or any other similar media adapted to store data 220, including meta data and parity information. The storage device 208 may be external to the server architecture 200 and accessible via a storage adapter (not shown), however as illustratively described herein, the information is stored on a non-volatile mass storage device within the server architecture 200.

The operating system 205 facilitates the server's access to data 220, including art images 103 and uploaded images of particular settings 105. The operating system 205 can be a conventional operating system, such as Windows, Macintosh, UNIX or Linux.

The customization module 216 contains logic to manipulate the appearance of the image of art 103 in accordance with a preference of a user. The customization module 216 allows the user to adjust one or more attributes of the image of art 103. Some customizable attributes are general to different types of art, such as color, dimension, brightness and contrast. Other customizable attributes are particular to a certain type of art. For example wall décor is customizable to include various types of frames, glass or plastic coverings, and/or matting.

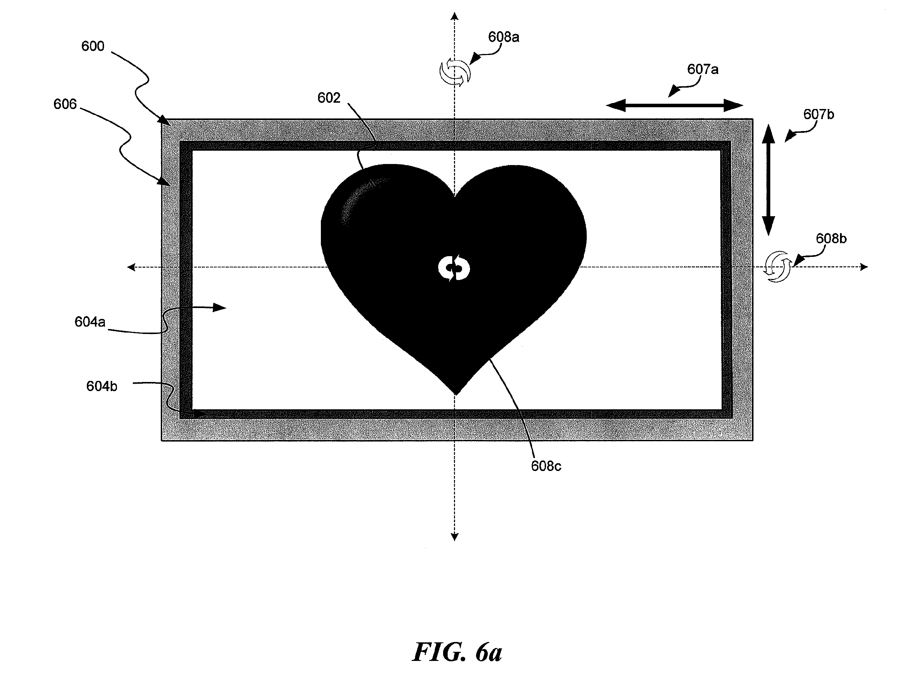

Figure 6a illustrates an art image of heart 602 customizable by a user. As shown in Figure 6a, an art image of a heart 602 is transformable into a customized image of art 600 by mounting the art image of the heart 602 on a first matting 604a and second matting 604b, for example. The type, quality, style, and color, for instance, are selectable via the customization module 216 by a user. Additionally, a frame type 606 is selectable for the art image of the heart 602 from a list of frame images accessible to the server 102 and/or the client 104a or 104b.

The customization module 216 additionally allows for manual scaling and skewing of the image of art 103 by the user. The client 104a or 104b sends a signal via the network 106 to the server 102 indicating a desired adjustment of an image of art 103. The customization module 216 receives this signal and performs the corresponding alteration(s) to the image of art 103. As shown in Figure 6a, the framed and matted image of the heart 600 is adjustable by, for example, altering the length 607a or height 607b to change the size of the customized image of art 600. Similarly, the customized image of art 600 can be skewed across one or more axes to adjust the perspective of the image art. For example and as shown in Figure 6a, the customized image of art 600 is adjustable around axis 608a, axis 608b, and axis 608c, either independently or concomitantly. Additional axes and rotations are contemplated to provide the user with tools to position and skew an image of art 103 across walls and surfaces in the image of the particular setting 105 that are at nonlinear and/or obtuse angles.

In some scenarios, the user may desire to change the brightness and/or contrast of the image of art 103 to match an amount of lighting within the image of the particular setting 105. For example, the user can adjust the brightness of the image of art 103 to darken the image of art 103 to correspond with a low-level of light within the image of particular setting 105. Similarly, the user can adjust the contrast of the image of art 103 to match a level of contrast within the image of the particular setting 105. In an exemplary embodiment, a client 104a or 104b sends a signal via the network 106 to the server 102 indicating a desired brightness and/or contrast level to apply to the image of art 103. The customization module 216 receives this signal and performs the corresponding brightness and/or contrast alteration to the image of art 103.

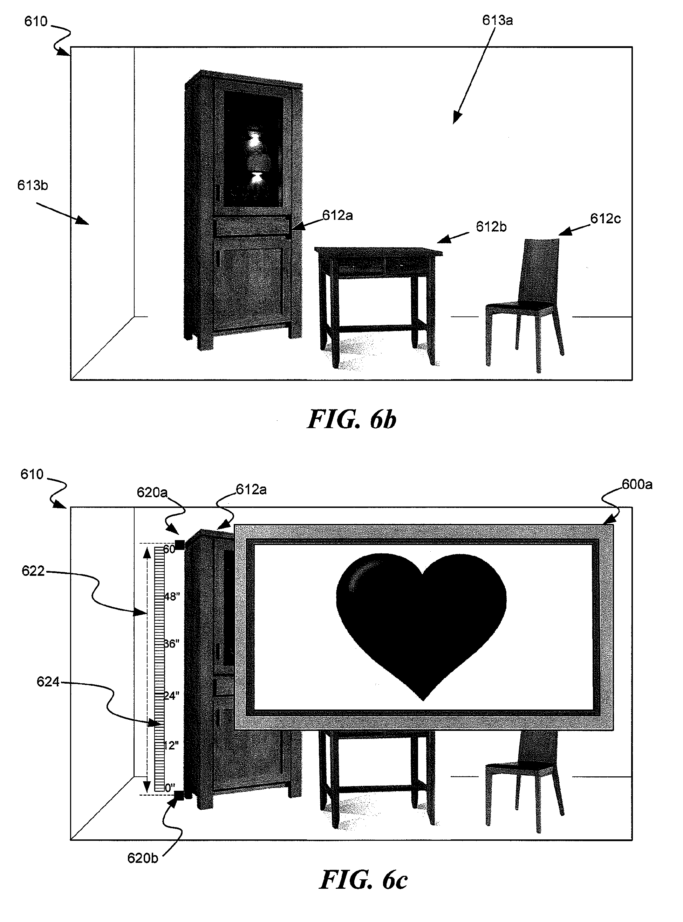

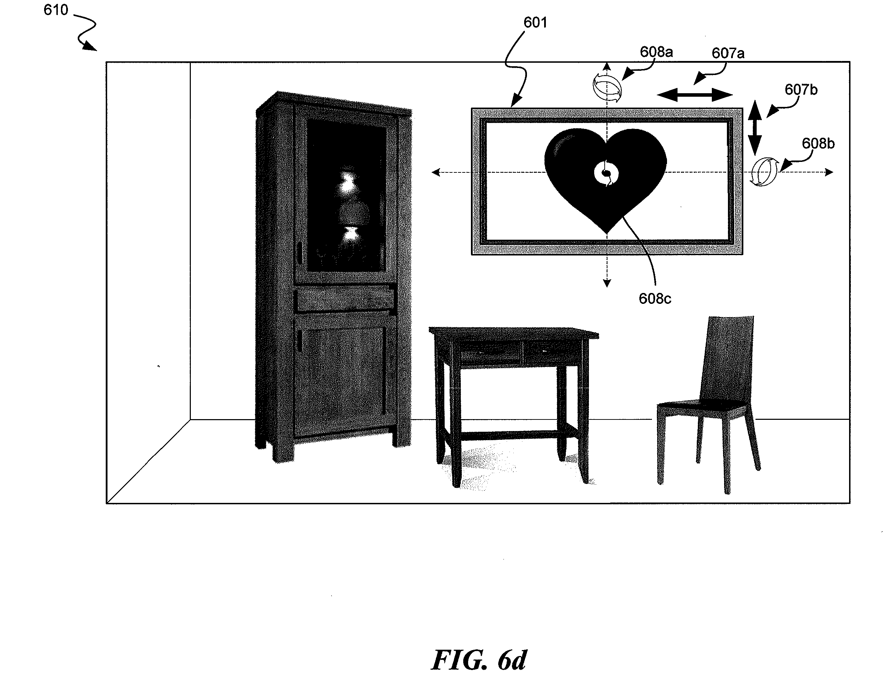

The virtualization module 212 contains logic to overlay an image of art 103 movably across a background or an image of the particular setting 105 such that when viewed, the image of art 103 appears to be above the background or image of the particular setting 105. The virtualization module 212 allows a user at the client 104a or 104b to move the image of art 103 across an uploaded image of the particular setting 105. A user at the client 104a or 104b manipulates the image of art 103 with an input device at the client 104a or 104b that sends a signal via network 106 to the server 102 where the virtualization module 212 adjusts the image of art 103 correspondingly. The image of art 103 is movable to spaces within the image of the particular setting 105 that correspond to the actual spaces in which the art is destined, therefore, a user can accurately determine how the art piece will appear in the actual particular setting. An example embodiment of the virtualization module 212 is illustrated in Figure 6b, Figure 6c and Figure 6d.

Figure 6b is an example image of the particular setting 105 uploaded by a user for use at the virtualization module 212. More specifically, Figure 6b shows an image of a living room 610 of a user as provided by the virtualization module 212. The image of the living room 610 contains walls 613a and 613b and objects 612a, 612b and 612c. In this example, the user may desire to place an art object or a picture on wall 613a above objects 612b and 612c and to the right of object 612a.

Figure 6c illustrates the customized image of art 600a disposed over the image of the living room 610. However, it is noted that the image of art 103 (or 602, as shown in the illustrative example of Figure 6a) need not be customized. The virtualization module 212 performs similarly with non-customized art images. For purposes of illustration, the visualization module 212 is shown using the customized image of art 600. The customized image of art 600 may receive additional customization by the customization module 216 while being viewed by the user at the virtualization module 212. For example, the user may manually move, resize, rotate, skew and/or adjust the brightness or contrast of the customized image of art 600 while it overlies the image of the living room 610.

To accurately determine how an art object will appear in a particular setting, the image of art 103 is proportionally scaled based on a dimension of the particular setting. This is accomplished by measuring a dimension of the actual particular setting and applying that measurement to the same dimension in the image of the particular setting 105. For example, to accurately proportion the customized image of art 600 based on the image of the living room 610, the user may provide a measurement of one of the objects 612a-612c or walls 613a-613b. If the cabinet is chosen as the object of measurement, the user measures the height of the actual cabinet, for example, by measuring the distance between a bottom point of the cabinet and an uppermost point of the cabinet. The measured value of the height of the actual cabinet is then applied to the image of the cabinet 612a, as further explained below.

A user applies a measured value of an actual object to an image of that object by use of the resizing module 214. Only one dimension is necessary for the resizing module to proportionally resize an image of art 103 to an image of the particular setting 105. Different dimensions can be selected, such as an object's length or height. Continuing the example where the cabinet was chosen as the object of measurement, if the actual cabinet has a height equal to 7 feet as measured from the uppermost point of the actual cabinet to a bottom point, for instance, that value is applied to the image of the cabinet 612a by selecting corresponding measuring points at the image of the cabinet 612a.

For example and as illustrated in Figure 6c, the user can select two points at the image of the particular setting 105 including a top measuring point 620a and a bottom measuring point 620b. The points 620a and 620b represent the same measuring points used to determine the actual cabinet's height of seven feet. The user may select the points 620a and 620b using an input device at the client 104a or 104b. For example, the user may move a mouse across a display to the top measuring point 620a, select that point as a first measuring point and move the mouse to the bottom measuring point 620b to select it as a second measuring point. The user then enters the value for the distance between the two points 620a and 620b. Continuing with the above example, the user would enter a value of seven feet to indicate that object 612a has a corresponding actual height of seven feet.

The distance between the two points may be graphically represented at the virtualization module. A simple graphic, such as arrow 622 or graphical measuring tool 624, may illustrate for the user the distance between the two points 620a and 620b. The graphical representations function like a virtual tape measure that stretches between the two points 620a and 620b to provide the user a visual representation of the measured height, for example. Once the value of distance between the two points 620a and 620b is indicated by the user, the resizing module automatically scales the image of art 103 to proportionally fit the image of the particular setting 105.

Figure 6d illustrates an example of a disposed proportionally scaled image of art 103 movably positioned to a desired location within an example image of particular setting 105. The resizing module proportionally scales the image of the heart 601 based on the user provided value of the distance between the two points 620a and 620b.

In one embodiment, the resizing module resizes the image of art 103 while maintaining the dimensions of the image of the particular setting 105. Alternatively, the resizing module may resize the image of the particular setting 105 while maintaining the dimensions of the image of art 103. As understood by a person having ordinary skill in the art, in another embodiment both the image of art 103 and the image of the particular setting 105 are resized to reach proportionality based on the user provided value of the distance between the two point 620a and 620b.

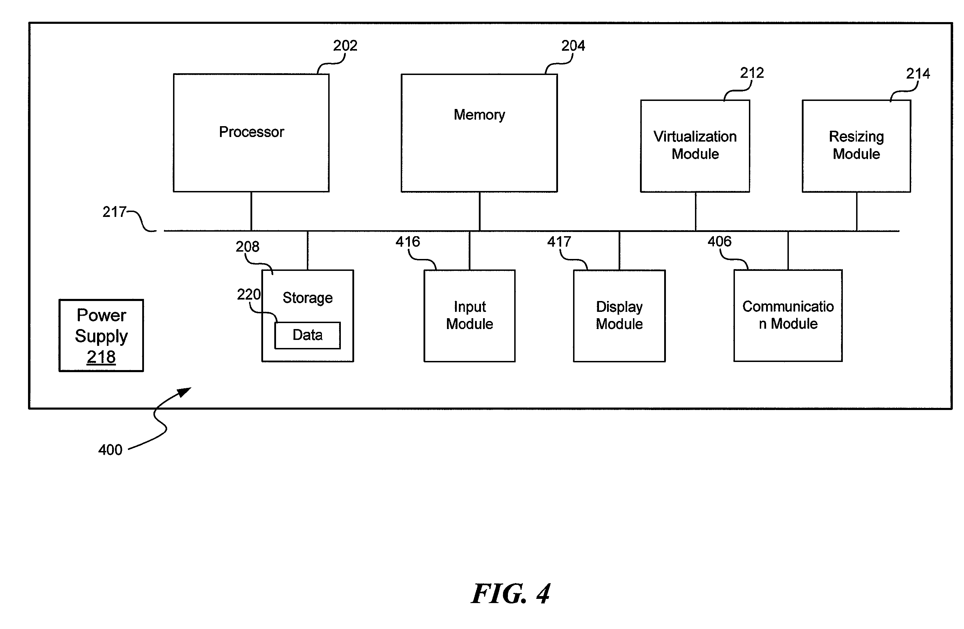

The clients 104a and 104b share an internal architecture similar to the server architecture described for the server architecture 200 and illustrated in Figure 4, therefore, the pertinent features described for the server architecture 200 are additionally applicable to the clients 104a and 104b. In addition to the features described for the server architecture 200, the clients 104a and 104b include an input module 416 for selecting and/or entering data, and a display module 417 for displaying data to a user, such as the image of art 103, image of the particular setting 105, and other data communicated between the clients 104a/104b and the server 102. Additionally, client 104b includes a communication module 406 having circuitry necessary to communicate wirelessly via network 106 to server 102.

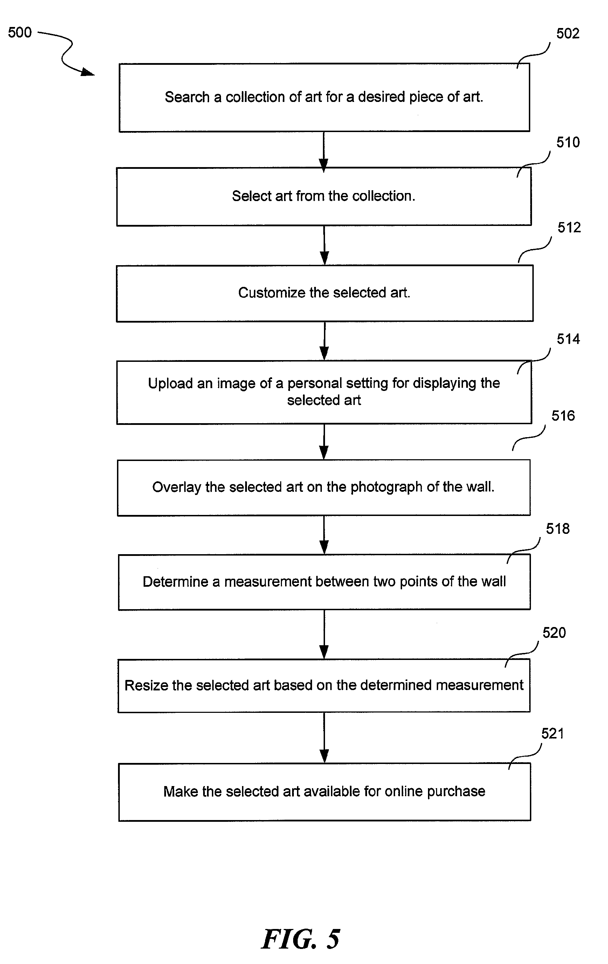

Figure 5 illustrates a high-level overview of sequences 500 utilized by the disclosed method to make available for purchase a piece of art based on the proportionally scaled image of the art disposed within a user provided image of the particular setting.

Step 502 describes a process of searching through a collection of images of art or other objects for a desirable item. A user may perform a search by sending a search query from client 104a and/or 104b to server 102 and the user can view the search results at a display 417 at the client 104a and/or 104b.

Step 510 describes the process of selecting the desired piece of art from the collection. For example, the user at the client 104a/104b may browse an online catalog of the collection of art using a web browser and select the desired piece of art using an input device, such as a mouse or touch-screen, for instance.

Step 512 describes the customization of the desired piece of art. Details describing how an object is customizable were previously described in the description for the customization module 216.

Step 514 describes the process of uploading an image of the particular setting for use as a background for the desired piece of art. For example, the user may take a photograph of a particular setting, such as a dining room in which the user wants to place the desired piece of art. The photograph is uploaded to the server 102.

In step 516, an image of the selected piece of art is disposed within the uploaded image of the particular setting 105. As previously described, the disposed image of the selected piece of art 102 appears to the user to be above and within the particular setting of the uploaded image of the particular setting 105.

Step 518 describes the process of determining a dimension of the particular setting for use in scaling the selected piece of art. As previously described, the user determines the height or width, for example, of an object or feature in the particular setting. An object or feature can be any measurable object in the particular setting, such as a wall, table, picture, bed, dresser, window, shelf, chair, sofa, person, animal, etc. The user measures that object or feature and associates the measured value to a dimension corresponding to the image of that object or feature within the uploaded image of the particular setting 105.

Step 520 describes the process of resizing the selected piece of art disposed into the image of the particular setting by proportionally scaling the selected piece of art based on the measured value determined in step 518. As previously described, the resizing module 214 scales the selected piece of art as a function of the measured dimension of an object.

Step 521 describes the process of purchasing the selected piece of art. For example, once the disposed proportionally sized image of art is created and the user determines that the piece of art will fit and work in the desired space within the particular setting, the user may add the selected piece of art to an online shopping cart, for instance. The disclosed system has the necessary technology to support financial transactions, including credit cart and debt card based transactions, wire transfers, and check processing.

The techniques introduced above can be implemented by programmable circuitry programmed or configured by software and/or firmware, or entirely by special-purpose circuitry, or in a combination of such forms. Such special-purpose circuitry (if any) can be in the form of, for example, one or more application-specific integrated circuits (ASICs), programmable logic devices (PLDs), field-programmable gate arrays (FPGAs), etc.

Software or firmware for implementing the techniques introduced here may be stored on a machine-readable storage medium and may be executed by one or more general-purpose or special-purpose programmable microprocessors. A "machine-readable medium", as the term is used herein, includes any mechanism that can store information in a form accessible by a machine (a machine may be, for example, a computer, network device, cellular phone, particular digital assistant (PDA), manufacturing tool, any device with one or more processors, etc.). For example, a machine-accessible medium includes recordable/non-recordable media (e.g., read-only memory (ROM); random access memory (RAM); magnetic disk storage media; optical storage media; flash memory devices), etc.

The term "logic", as used herein, can include, for example, special-purpose hardwired circuitry, software and/or firmware in conjunction with programmable circuitry, or a combination thereof.

Although the present invention has been described with reference to specific exemplary embodiments, it will be recognized that the invention is not limited to the embodiments described, but can be practiced with modification and alteration within the spirit and scope of the appended claims. Accordingly, the specification and drawings are to be regarded in an illustrative sense rather than a restrictive sense.

Some aspects of embodiments of the invention are defined in the following enumerated example embodiments (EEEs):
EEE 1: A method of sizing an image of art to proportionally scale within an image of a setting, comprising:
   providing the image of the setting;
   providing the image of art disposed within the image of the setting;
   receiving a measurement of a distance between two points within the image of the setting, wherein the points are selected by a user; and
   resizing to proportionally scale the image of art selected by the user, based on the received measurement.
EEE 2: The method of EEE 1, wherein the image of the setting is uploaded by the user.
EEE 3: The method of EEE 1, wherein the proportionally scaled image is movable within the image of the setting.
EEE 4: The method of EEE 1, wherein the proportionally scaled image is skewed to fit a perspective in the image of the setting.
EEE 5: The method of EEE 1, further comprising receiving a request to customize the image of art, wherein customizing the image of art includes modifying at least one attribute of the image of art based on a preference of the user.
EEE 6: The method of EEE 5, wherein the attribute is a dimension of the image of art.
EEE 7: The method of EEE 5, wherein the attribute is a frame type, glass type, or a matting type used by the image of art.
EEE 8: The method of EEE 1, wherein the image of art is a wall décor object.
EEE 9: The method of EEE 8, wherein the wall décor object is selected from a group consisting of a poster, art print, photograph, drawing, painting, tapestry, wall decal, mural, and sign.
EEE 10: The method of EEE 1, wherein the image of art is an image selected from a group consisting of a sculpture, statue, ceramic work, glass work, metal work, mixed media art object and installation.
EEE 11: The method of EEE 1, further comprising making available for online purchase the art in the image of art.
EEE 12: A method comprising:
   receiving an uploaded image of setting on which to display an image of art;
   overlaying the selected image of art in a location bounded by the image of setting;
   receiving a user measurement of a distance between two points within the image of setting; and
   resizing to proportionally scale the selected image of art based on the received measurement of the distance between the two points.
EEE 13: The method of EEE 12, wherein the two points within the image of setting are selected by the user.
EEE 14: The method of EEE 12, wherein the proportionally scaled image is skewed to fit a perspective in the image of the setting.
EEE 15: The method of EEE 12, wherein resizing the selected image of the art preserves a size of the image of setting.
EEE 16: The method of EEE 12, wherein resizing the selected image of art preserves a size of the image of art and proportionally scales the image of setting.
EEE 17: The method of EEE 12, wherein resizing the selected image of art includes resizing the image of art and resizing the image of setting.
EEE 18: The method of EEE 12, further comprising receiving a request to move the resized selected image of art to a new location within the uploaded picture of the wall.
EEE 19: The method of EEE 12, wherein the image of art is a wall décor object.
EEE 20: The method of EEE 19, wherein the wall décor object is selected from a group consisting of a poster, art print, photograph, drawing, painting, tapestry, wall decal, mural, and sign.
EEE 21: The method of EEE 12, wherein the image of art is an image selected from a group consisting of a sculpture, statue, ceramic work, glass work, metal work, mixed media art object and installation.
EEE 22: The method of EEE 12, further comprising customizing the selected image of art based on a preference of the user.
EEE 23: The method of EEE 22, wherein customizing the selected image of art includes modifying an attribute of the art.
EEE 24: The method of EEE 23, wherein the modified attribute is a dimension of the image of art.
EEE 25: The method of EEE 23, wherein the modified attribute is a frame type, glass type, or a matting type used by the image of art.
EEE 26: The method of EEE 12, further comprising making available for online purchase the art in the image of art.
EEE 27: An online art processing system, comprising:
   a storage system having a user-selectable image of art;
   a virtualization module for overlaying the user-selected image of art on a user-selected background; and
   a resizing module to proportionally scale the image of art based on the user-selected background.
EEE 28: The online art processing system of EEE 27, wherein the user can move the overlain image of art across the user-selected background.
EEE 29: The online art processing system of EEE 27, wherein the overlain image is skewed to fit a perspective in the user-selected background.
EEE 30: The online art processing system of EEE 27, further comprising a customization module to enable a user to modify an attribute of the user-selectable image of art.
EEE 31: The online art processing system of EEE 30, wherein the attribute to modify is a dimension of the image of art.
EEE 32: The online art processing system of EEE 30, wherein the attribute to modify is a frame type, glass type, or a matting type used by the image of art.
EEE 33: The online art processing system of EEE 27, further comprising a network adapter to receive data from the user.
EEE 34: The online art processing system of EEE 33, wherein the data is a user-uploaded image of setting.
EEE 35: The online art processing system of EEE 33, wherein the data is a value of the distance between the two user-selected points within the user-selected background.
EEE 36: The online art processing system of EEE 34, wherein the user-selected background is the user-uploaded image of setting.
EEE 37: The online art processing system of EEE 36, wherein the user-uploaded image of setting is saved at the storage system for use as a background for a second user-selectable image of art without re-uploading the image of setting.
EEE 38: The online art processing system of EEE 27, wherein the virtualization module further provides a graphical representation of a measuring tool displayable to the user at a display, the measuring tool for indicating the distance between two user selected points.
EEE 39: The online art processing system of EEE 27, wherein the image of art is a wall décor object.
EEE 40: The online art processing system of EEE 39, wherein the wall décor object is selected from a group consisting of a poster, art print, photograph, drawing, painting, tapestry, wall decal, mural, and sign.
EEE 41: The online art processing system of EEE 27, wherein the image of art is an image selected from a group consisting of a sculpture, statue, ceramic work, glass work, metal work, mixed media art object and installation.
EEE 42: The method of EEE 27, further comprising making available for online purchase the art in the image of art.
EEE 43: A mobile device for viewing art on a user selected photograph of a wall, comprising:
   a camera module to capture one or more images of setting on which to view an image of art;
   a display module having a graphical user interface for searching and selecting images of art to view on the one or more images of setting;
   a communication module to upload the one or more images of setting; and
   a virtualization module to overlay a selected image of art across the one or more images of setting.
EEE 44: The mobile device of EEE 43, wherein the communication module further includes receiving from the user a value of a distance between two user selected points within one of the one or more images of setting.
EEE 45: The mobile device of EEE 43, wherein the virtualization module provides a measuring tool for use on the graphical user interface by the user for measuring a distance between two user-selected points within one of the one or more images of setting.
EEE 46: The mobile device of EEE 43, wherein the selected image of art is movable within a dimension of the one or more images of setting.
EEE 47: The mobile device of EEE 46, wherein the selected image of art is movable by a touch of a user received at a touch-sensitive screen attached to the display module.
EEE 48: The mobile device of EEE 46, wherein the selected image of art is scalable by a touching motion of a user received at a touch-sensitive screen attached to the display module.
EEE 49: The mobile device of EEE 43, wherein the image of art is a wall décor object.
EEE 50: The mobile device of EEE 43, wherein the image of art is an image selected from a group consisting of a sculpture, statue, ceramic work, glass work, metal work, mixed media art object and installation.
EEE 51: The mobile device of EEE 43, further comprising a resizing module to proportionally modify a size of the selected image of art based on a distance between two user-selected points within one of the one or more images of setting.
EEE 52: The mobile device of EEE 51, wherein the resizing module further includes skewing the selected image of art to proportionally fit at least one of the one or more images of setting.
EEE 53: The method of EEE 43, further comprising making available for online purchase the art in the image of art.
EEE 54: A method of providing an image of art within an image of a setting, comprising:
   receiving an upload of the image of the setting; and
   providing the image of art disposed within the image of the setting.
EEE 55: The method of EEE 54, further comprising:
   receiving a measurement of a distance between points within the image of the setting;
   in response to receiving the measurement, resizing the image of art disposed within the image of setting; and
   receiving a request to customize the image of art, wherein customizing the image of art includes modifying at least one attribute of the image of art based on a preference of the user.
EEE 56: The method of EEE 55, wherein the attribute is a contrast of the image of art.
EEE 57: The method of EEE 55, wherein the attribute is a brightness of the image of art.
EEE 58: The method of EEE 54, wherein the image of the setting is uploaded by a user at a remote system.
EEE 59: The method of EEE 55, wherein said resizing of the image of art further includes proportionally scaling the image of art based on the image of setting, and wherein the proportionally scaled image is movable within the image of the setting.
EEE 60: The method of EEE 59, wherein the proportionally scaled image is skewed to fit a perspective in the image of the setting.
EEE 61: The method of EEE 54, further comprising making available for online purchase the art in the image of art.

## Claims

1. A method of sizing an image of art to proportionally scale within an image of a setting, comprising:
providing the image of the setting;
providing the image of art disposed within the image of the setting;
receiving a measurement of a distance between two points within the image of the setting, wherein the points are selected by a user; and
resizing to proportionally scale the image of art selected by the user, based on the received measurement.

2. The method of claim 1,
wherein the image of the setting is uploaded by the user, and/or
wherein the proportionally scaled image is movable within the image of the setting, and/or
wherein the proportionally scaled image is skewed to fit a perspective in the image of the setting.

3. The method of claim 1, further comprising receiving a request to customize the image of art, wherein customizing the image of art includes modifying at least one attribute of the image of art based on a preference of the user.

4. The method of claim 3,
wherein the attribute is a dimension of the image of art, and/or
wherein the attribute is a frame type, glass type, or a matting type used by the image of art.

5. The method of claim 1, wherein the image of art is a wall décor object, in particular a wall décor object selected from a group consisting of a poster, art print, photograph, drawing, painting, tapestry, wall decal, mural, and sign.

6. The method of claim 1,
wherein the image of art is an image selected from a group consisting of a sculpture, statue, ceramic work, glass work, metal work, mixed media art object and installation, and/or
further comprising making available for online purchase the art in the image of art.

7. A use comprising:
receiving an uploaded image of a setting on which to display an image of art;
overlaying the selected image of art in a location bounded by the image of the setting;
receiving a user measurement of a distance between two points within the image of the setting; and
resizing to proportionally scale the selected image of art based on the received measurement of the distance between the two points.

8. An online art processing system, comprising:
a storage system having a user-selectable image of art;
a virtualization module for overlaying the user-selected image of art on a user-selected background; and
a resizing module to proportionally scale the image of art based on the user-selected background.

9. The online art processing system of claim 8,
wherein the user can move the overlain image of art across the user-selected background, and/or
wherein the overlain image is skewed to fit a perspective in the user-selected background.

10. The online art processing system of claim 8, further comprising a customization module to enable a user to modify an attribute of the user-selectable image of art.

11. The online art processing system of claim 10,
wherein the attribute to modify is a dimension of the image of art, and/or
wherein the attribute to modify is a frame type, glass type, or a matting type used by the image of art.

12. The online art processing system of claim 8, further comprising a network adapter to receive data from the user, wherein the data comprises a user-uploaded image of setting and/or a value of the distance between the two user-selected points within the user-selected background.

13. A product, namely mobile device for viewing art on a user selected photograph of a wall, comprising:
a camera module to capture one or more images of a setting on which to view an image of art;
a display module having a graphical user interface for searching and selecting images of art to view on the one or more images of the setting;
a communication module to upload the one or more images of the setting; and
a virtualization module to overlay a selected image of art across the one or more images of the setting.

14. The product of claim 13, wherein the communication module further includes receiving from the user a value of a distance between two user selected points within one of the one or more images of the setting.

15. The product of claim 13, wherein the virtualization module provides a measuring tool for use on the graphical user interface by the user for measuring a distance between two user-selected points within one of the one or more images of the setting.
